# EUROPÄISCHE PATENTSCHRIFT

(11) **EP 2 885 190 B1**
(45) Veröffentlichungstag und Bekanntmachung des Hinweises auf die Patenterteilung: **10.10.2018**
(21) Anmeldenummer: 13750689.5
(22) Anmeldetag: 16.08.2013
(51) Int. Cl.: B61C 15/10

(54) **STREUGUTAUSTRAGANLAGE FÜR FAHRZEUGE, INSBESONDERE SCHIENENFAHRZEUGE, UND VERFAHREN ZUM AUSBRINGEN VON STREUGUT**
SCATTERING-MATERIAL DISPENSING SYSTEM FOR VEHICLES, IN PARTICULAR RAIL VEHICLES, AND METHOD FOR DISPENSING SCATTERING MATERIAL
INSTALLATION DE DÉVERSEMENT DE MATÉRIAU D'ÉPANDAGE POUR VÉHICULES, EN PARTICULIER POUR VÉHICULES FERROVIAIRES, ET PROCÉDÉ DE DÉVERSEMENT DE MATÉRIAU D'ÉPANDAGE

(30) Priorität: 17.08.2012 DE 102012214643
(43) Veröffentlichungstag der Anmeldung: 24.06.2015
(73) Patentinhaber: Bombardier Transportation GmbH, 10785 Berlin (DE)
(72) Erfinder: BRAND, Thomas, 02977 Hoyerswerda (DE); OTTERBACH, Joachim, 57234 Wilnsdorf (DE)
(74) Vertreter: Patentanwälte Bressel und Partner mbB
(86) Internationale Anmeldenummer: PCT/EP2013/067116
(87) Internationale Veröffentlichungsnummer: WO 2014/027077

(56) Entgegenhaltungen:
- EP-A1- 0 178 289
- EP-A1- 0 378 066
- GB-A- 328 597
- US-A- 1 781 637

## Beschreibung

Die vorliegende Erfindung betrifft eine Streugutaustraganlage für Fahrzeuge, insbesondere Schienenfahrzeuge, sowie ein Verfahren zur Ausbringung von Streugut mittels einer Streugutaustraganlage gemäß dem Oberbegriff der Ansprüche 1 und 8.

Derartige Anlagen und Verfahren gewinnen immer größere Bedeutung als Bestandteil von Bremsausrüstungen bei Schienenfahrzeugen zur Erhöhung der Haftreibung zwischen Radreifen und Schiene.

Aus dem Stand der Technik sind zahlreiche Streugutaustrageinrichtungen für Schienenfahrzeuge bekannt. Derartige Streugutaustrageinrichtungen weisen in der Regel eine Austragseinheit und einen Vorratsbehälter auf, der mit Sand befüllt ist und aus dem mittels unterschiedlicher Verfahren der Sand über die Austragseinheit auf die Schiene zu den Rädern des Schienenfahrzeuges befördert wird, um die Traktion des Schienenfahrzeuges beim Anfahren und Abbremsen zu verbessern. In der einfachsten Ausführungsform bestehen derartige Vorrichtungen aus einem Sandkasten, aus dem beim Öffnen eines Schiebers Streusand unter Einwirkung der Schwerkraft durch ein Fallrohr auf die Schiene rieselt. Der Begriff "Sand" umfasst dabei neben Quarzsand auch alle anderen bekannten alternativen Streumittel für derartige Zwecke wie z.B. granulare Materialien aus Metalloxiden etc.

Weiterentwickelte Ausführungsformen von bekannten Streugutaustrageinrichtungen werden verfahrenstechnisch als pneumatische Flugstromförderungen, in denen Umgebungsluft als Prozessluft zum Einsatz kommt, betrieben und umfassen in der Regel einen trichterförmig ausgebildeten Vorratsbehälter, wobei mittels einem am Boden des trichterförmigen Bereichs des Vorratsbehälters angeordneten Saug- oder Druckdüseneinsatzes, der Sand aus dem Boden des Vorratsbehälters gesaugt und durch eine Förderleitung vor die Räder des Schienenfahrzeuges transportiert wird. Die Förderluft wird dabei meist außerhalb oder innerhalb der Fahrzeuge angesaugt. Dies führt durch Witterungseinflüsse zum Eintrag von Feuchtigkeit, Taupunktunterschreitungen und Vereisungen im Streugutaustragsystem und der Druckluftanlage. Dadurch kann es im Verlauf des Betriebes der Streugutaustrageinrichtung zu Verstopfungen der Sandförderleitungen kommen, was zu einem Verklumpen oder Einfrieren des Streumittels in der Förderleitung führen kann und damit Betriebsstörungen oder gar der Ausfall der Anlage verursachen kann.

In der DE 102005030095 B4 werden eine Sandungseinrichtung sowie ein Verfahren zum Betreiben einer Sandungseinrichtung für Schienenfahrzeuge beschrieben. Dabei ist eine Unterdruckerzeugungseinrichtung vorgesehen, die nach dem Prinzip der Unterdrucksandung arbeiten kann, insgesamt wird aber ein Gleichdrucksystem bereitgestellt, bei dem eine druckdichte Ausbildung des Systems nicht funktionsnotwendig ist und wobei durch ein Sandungsrohr gerade soviel Luft angesaugt wird, wie den Sandbehälter eingeblasen wird. Der Sand tritt dabei mit einer sehr hohen Geschwindigkeit und ggf. höherem Druck aus. Bei diesem System wird der Sand pneumatisch aus dem Sandbehälter ausgetragen und pneumatisch gefördert.

In der AT 505782 B1 wird ebenfalls eine derartige mit Druckluft betriebene Sandaustragseinrichtung offenbart. Der Sand wird über eine Zellenradschleuse in ein pneumatisches Fördersystem aufgegeben. Durch die Optimierung der Sandzulaufgeometrie vom Sandbehälter in ein als Dosiereinrichtung dienendes Zellenrad soll hier die Funktions- und Betriebssicherheit erhöht werden.

In der DE 202009014775 U1 wird gleichfalls eine mit Druckluft betriebene Sandaustragseinrichtung für Schienenfahrzeuge beschrieben. Die Funktionssicherheit soll durch Mittel zur Regulierung der Luftansaugmenge am Lufteinlass des Kompressors verbessert werden. Auch bei diesem System wird der Sand pneumatisch aus dem Sandbehälter ausgetragen und pneumatisch gefördert.

Die DE 4011166 A1 offenbart eine Sandstreueinrichtung an Schienenfahrzeugen mit einem mit Streugut befüllbaren Vorratsbehälter sowie wenigstens einem in unmittelbarer Nähe eines Fahrzeugrades endenden Austrag für das Streugut. Der Sand wird bei diesem System mittels einer senkrechten von unten nach oben fördernden Förderschnecke in ein schräges Fallrohr aufgegeben. Die Förderschnecke ist dabei in einem Rohr innerhalb des Vorratsbehälters angeordnet.

In der GB 328 597 A wird eine Streugutanlage für Lokomotiven offenbart, die sich aber insbesondere deutlich in Bezug auf die Dosiereinrichtung unterscheidet. Das gilt auch für die in der US 1,781,289 A1 beschriebene Sandaustragungsvorrichtung für Lokomotiven.

In der EP 0178289A1 wird ein Streugerät für Fahrzeuge beschrieben, welches eine Wurfwalze umfasst.

Die oben genannten Vorrichtungen weisen keine Dosiereinheiten auf, die geeignet sind, die zu fördernde Streugutmenge festzulegen.

Aufgabe der Erfindung ist es die bekannten Streugutaustraganlagen sowie Verfahren zur Ausbringung eines Streumittels mittels derartiger Streugutaustraganlagen zu verbessern. Dabei sollen die durch den Einsatz von Druckluft (Umgebungsluft) als Prozessluft innerhalb pneumatischer Fördersysteme und Verfahren entstehenden Nachteile überwunden werden und die Betriebs- und Funktionssicherheit sowie die Energieeffizienz erhöht werden.

Erfindungsgemäß wird diese Aufgabe mit einer Streugutaustraganlage bzw. einem Verfahren der eingangs genannten Art durch die Merkmale der Ansprüche 1 und 8 gelöst. Vorteilhafte Weiterbildungen der Erfindung sind in den jeweils zugehörigen Ansprüchen enthalten.

Demnach besteht die Erfindung aus einer Streugutaustraganlage für Fahrzeuge, insbesondere Schienenfahrzeuge mit einem mit Streugut befüllbaren Vorratsbehälter und einem der Austragsöffnung des Vorratsbehälters zugeordnetem Auflockerungselement sowie wenigstens einer in unmittelbarer Nähe eines Radreifen - Schiene - Spaltes endenden Austragsleitung für das Streugut, wobei dem Auflockerungselement eine Dosiereinheit und ein mit der Dosiereinheit verbundenes Förderelement nachgeordnet sind und das Förderelement mit einem Absperr- und Zuluftventil und der vorgenannten Austragsleitung in Verbindung steht. Vorteilhaft ist vorgesehen, dass am Gehäuse des Absperr- und Zuluftventils eine Öffnung nach außen angebracht ist, die das Ansaugen von Luft durch das schnell fallende Streugut ermöglicht. Ohne diese Öffnung würde das fallende Streugut in der Austragleitung durch rückströmende Luft gebremst. Nach jedem Austragvorgang wird das Absperrventil geschlossen. Das Absperrventil ist mit einer Doppelfunktion ausgestattet. Ein Nachfließen von Streugut und das Einströmen von ggf. feuchter / schmutziger Luft aus dem Schienen / Bodenbereich wird dadurch gleichzeitig verhindert.

Vorteilhaft sind dabei das Auflockerungselement die Dosiereinheit und das Förderelement über eine gemeinsame Antriebswelle und einem gemeinsamen Antrieb miteinander verbunden. Das Auflockerungselement und die Dosiereinheit sind bevorzugt in einem gemeinsamen Gehäuse waagerecht zur senkrechten Mittelachse des Vorratsbehälters angeordnet. Vorzugsweise ist weiter vorgesehen, dass das Auflockerungselement ruderförmige Platten aufweist, die in die Austragsöffnung des Vorratsbehälters das Streugut auflockernd eingreifen. Der Massenfluss im Vorratsbehälter wird dadurch positiv unterstützt.

Nach einem besonderen Merkmal der Erfindung besteht die Dosiereinheit aus einem in einem rohrförmigen Gehäuse angeordneten Schneckenförderer mit einem sich zum Auslauf konisch verengendem Querschnitt, wobei zwischen den Blättern des Schneckengewindes Prallbleche zur Erzeugung eines Labyrinths angeordnet sind. Vorteilhaft wird dadurch ein Überschütten des Dosierbereiches verhindert und ein gleichmäßiger Austrag des Streugutes aus dem Dosierbehälter in das Förderelement gewährleistet. Besonders vorteilhaft ist vorgesehen, dass das Förderelement aus einem flexiblen Schlauch mit einer innen gelagerten flexiblen Förderwendel besteht und zwischen dem konischen Auslauf der Dosiereinheit und dem Behälter angeordnet ist. Bevorzugt besteht das Förderelement dabei aus einem flexiblen Kunststoffschlauch, wobei die innen gelagerte flexible Förderwendel aus Federstahl mit einem rechteckigen Querschnitt ausgebildet ist. Durch die erfindungsgemäße Ausbildung des Förderelementes wird der Streugutaustrag im Bereich Rad-Schiene unabhängig typischen Fahrzeugbewegungen wie Drehbewegungen des Fahrzeuggestells, Neigungen des Drehgestells, Einfedern bei unterschiedlichen Beladungszuständen des Fahrzeuges, Kurvenfahrten, Abbremsungen und Beschleunigungen sichergestellt.

Die o. g. Aufgabe wird weiter mit einem Verfahren der eingangs genannten Art erfindungsgemäß dadurch gelöst, dass die Streugutaustraganlage gemäß den o. g. Merkmalen ausgebildet ist, wobei das Streugut durch das Auflockerungselement aufgelockert und vergleichmäßigt wird und in der Dosiereinheit die zu fördernde Streugutmenge festgelegt wird, wobei die innerhalb der Dosiereinheit angeordneten Prallbleche zur Vermeidung einer Überschüttung der Dosiereinheit eine Barriere bilden und das Streugut weiter von der Dosiereinheit aus in das Förderelement übergeben wird und von dort aus rein mechanisch zur Austragsleitung gefördert wird, welche das Streugut in unmittelbarer Nähe des Radreifen - Schiene - Spaltes ausbringt. Zeitgleich mit dem Abschalten des Fördervorgangs wird dabei das Abschaltventil betätigt, wodurch vorteilhaft ein Nachrieseln des Streugutes verhindert wird.

Die erfindungsgemäße Lehre ermöglicht eine rein mechanische Förderung des Streugutes, die komplett ohne Druckluft auskommt. Durch den Verzicht auf Druckluft wird die Betriebssicherheit der Streugutaustraganlage erhöht. Außerdem wird die Anlage dadurch unempfindlicher gegen klimatische Umwelteinflüsse und energieeffizienter, weil Druckluft die teuerste Form erzeugter Energie darstellt. Mit dem erfindungsgemäßen Verfahren wird durch den schonenden Umgang mit dem Streugut auch ein Beitrag zur Minimierung der Entstehung von Staub/Feinstaub im Personenverkehrsbetrieb geleistet.

Im Folgenden wird die Erfindung anhand eines nicht einschränkenden Ausführungsbeispiels, das in der Zeichnung dargestellt ist näher erläutert. In dieser zeigt schematisch
- Fig. 1: eine schematische Darstellung der Streugutaustraganlage gemäß der Erfindung und von Schiene und Fahrzeugrad,
- Fig. 2: eine weitere schematische Darstellung,

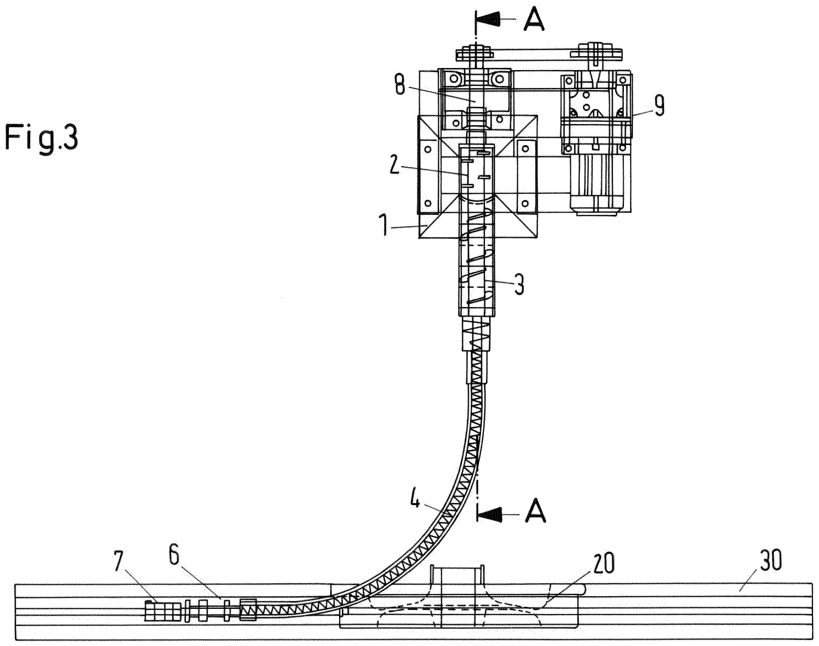

- Fig. 3: eine Ansicht der Darstellung in Fig. 1 von oben,

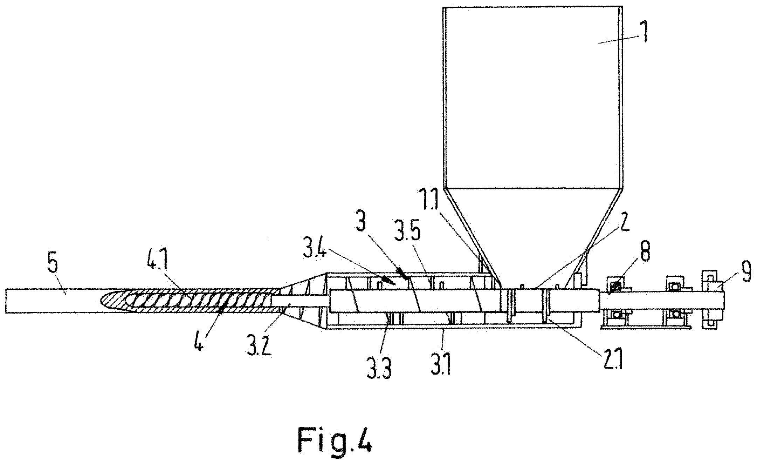

- Fig. 4: eine Schnittdarstellung (Schnitt A-A) der Darstellung nach Fig. 3.

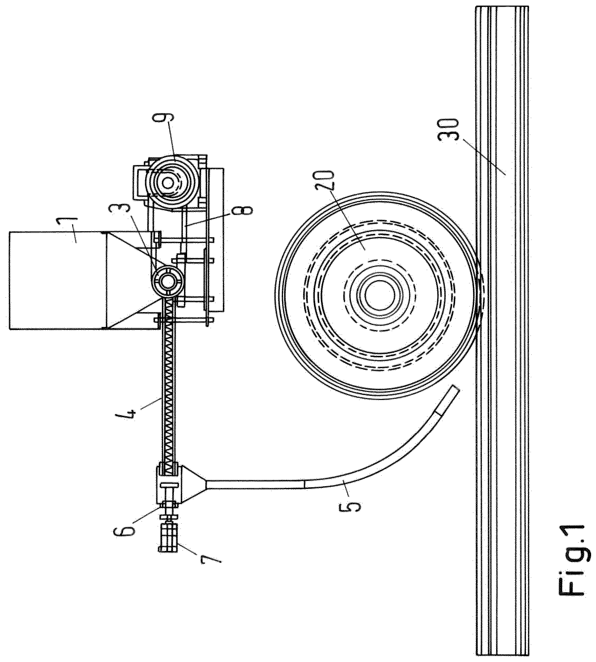

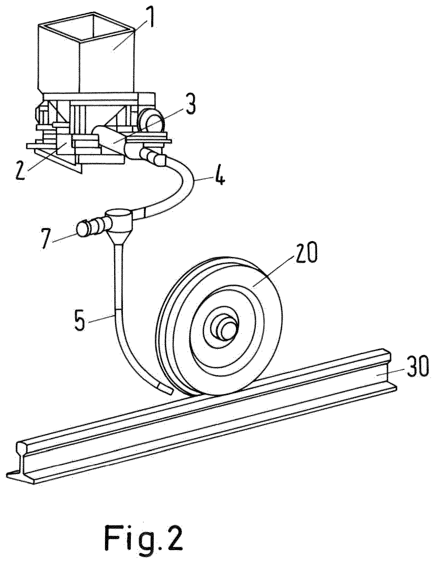

Die Figuren 1 und 2 zeigen ein Ausführungsbeispiel der erfindungsgemäßen Streugutaustraganlage 10 mit einem angedeuteten Schienefahrzeug in Form eines Fahrzeugrades sowie einer Fahrzeugschiene in einer schematischen Darstellung.

Die Anlage 10 umfasst einem mit Streugut befüllbaren Vorratsbehälter 1 und einem der Austragsöffnung des Vorratsbehälters 1 zugeordnetem Auflockerungselement 2 sowie wenigstens einer in unmittelbarer Nähe eines Radreifen 20 - Schiene 30 - Spaltes endenden Austragsleitung 5 für das Streugut. Der in der Fig. gezeigten Schnittdarstellung ist zu entnehmen, dass dem Auflockerungselement 2 eine Dosiereinheit 3 und ein mit der Dosiereinheit 3 verbundenes Förderelement 4 nachgeordnet sind, wobei das Förderelement 4 mit einem Absperr- und Zuluftventil 7 und der Austragsleitung 5 in Verbindung steht. Das Auflockerungselement 2, die Dosiereinheit 3 und das Förderelement 4 sind über eine gemeinsame Antriebswelle 8 und einem Antrieb 9 miteinander verbunden. Die Dosiereinheit 3 besteht aus einem in einem rohrförmigen Gehäuse 3.1 angeordneten Schneckenförderer mit einem sich zum Auslauf 3.2 konisch verengendem Querschnitt. Zwischen den Blättern 3.3 des Schneckengewindes 3.4 sind Prallbleche 3.5 zur Erzeugung eines Labyrinths angeordnet. Das Förderelement 4 besteht vorzugsweise aus einem flexiblen Schlauch mit einer innen gelagerten flexiblen Förderwendel 4.1 und ist zwischen mit dem konischen Auslauf 3.2 der Dosiereinheit 3 und dem Absperr- und Zuluftventil 7 angeordnet. Das Auflockerungselement 2 weist ruderförmige Platten 2.1 auf, die in die Austragsöffnung 1.1 des Vorratsbehälters das Streugut auflockernd eingreifen. Das Förderelement 4 besteht bevorzugt aus einem flexiblen Kunststoffschlauch und die innen gelagerte flexible Förderwendel 4.1 ist vorzugsweise aus Federstahl mit einem rechteckigen Querschnitt ausgebildet.

Das Streugut (nicht dargestellt) wird durch das Auflockerungselement 2 aufgelockert und vergleichmäßigt. In der Dosiereinheit 3 wird die zu fördernde Streugutmenge festgelegt, wobei die innerhalb der Dosiereinheit 3 angeordneten Prallbleche 3.5 zur Vermeidung einer Überschüttung der Dosiereinheit 3 eine Barriere bilden.

Das Streugut wird dann von der Dosiereinheit 3 aus in das Förderelement 4 übergeben und von dort aus rein mechanisch zur Austragsleitung 5 gefördert, über die das Streugut in unmittelbarer Nähe des Radreifen 20 - Schiene 30 - Spaltes ausgebracht wird.

Vorteilhaft ist vorgesehen, dass am Gehäuse 6 des Absperr- und Zuluftventils 7 eine Öffnung (nicht dargestellt) nach außen angebracht ist, die das Ansaugen von Luft durch das schnell fallende Streugut ermöglicht. Ohne diese Öffnung würde das fallende Streugut in der Austragleitung 5 durch rückströmende Luft gebremst. Nach jedem Austragvorgang wird das Absperrventil 7 geschlossen. Das Absperrventil 7 ist mit einer Doppelfunktion ausgestattet. Ein Nachfließen von Streugut und das Einströmen von ggf. feuchter / schmutziger Luft aus dem Schienen / Bodenbereich wird dadurch gleichzeitig verhindert.

## Patentansprüche

1. Streugutaustraganlage für Fahrzeuge, insbesondere Schienenfahrzeuge, mit einem mit Streugut befüllbaren Vorratsbehälter (1) und einem der Austragsöffnung des Vorratsbehälters (1) zugeordnetem Auflockerungselement (2) sowie wenigstens einer in unmittelbarer Nähe eines Radreifen - Schiene - Spaltes endenden Austragsleitung (5) für das Streugut,
wobei dem Auflockerungselement (2) eine Dosiereinheit (3) und ein mit der Dosiereinheit (3) verbundenes Förderelement (4) nachgeordnet sind, wobei das Förderelement (4) mit einem Absperr- und Zuluftventil (7) und einer Austragsleitung (5) in Verbindung steht, wobei die Dosiereinheit (3) aus einem in einem rohrförmigen Gehäuse (3.1) angeordneten Schneckenförderer besteht, **dadurch gekennzeichnet dass**, das rohrförmige Gehäuse (3.1) einen sich zum Auslauf (3.2) konisch verengenden Querschnitt aufweist und dass zwischen den Blättern (3.3) des Schneckengewindes (3.4) Prallbleche (3.5) zur Erzeugung eines Labyrinths angeordnet sind.

2. Streugutaustraganlage nach Anspruch 1, **dadurch gekennzeichnet, dass** das Auflockerungselement (2), die Dosiereinheit (3) und das Förderelement (4) über eine gemeinsame Antriebswelle (8) miteinander verbunden sind.

3. Streugutaustraganlage nach einem der Ansprüche 1 und 2, **dadurch gekennzeichnet, dass** das Förderelement (4) aus einem flexiblen Schlauch mit einer innen gelagerten flexiblen Förderwendel (4.1) besteht und zwischen dem konischen Auslauf (3.2) der Dosiereinheit (3) und dem Absperr- und Zuluftventil 7 angeordnet ist.

4. Streugutaustraganlage nach einem der Ansprüchen 1 bis 3, **dadurch gekennzeichnet, dass** das Auflockerungselement (2) ruderförmige Platten (2.1) aufweist, die in die Austragsöffnung (1.1) des Vorratsbehälters (1) das Streugut auflockernd eingreifen.

5. Streugutaustraganlage nach einem der Ansprüchen 1 bis 4, **dadurch gekennzeichnet, dass** das Auflockerungselement (2) und die Dosiereinheit (3) in einem gemeinsamen Gehäuse waagerecht zur senkrechten Mittelachse des Vorratsbehälters (1) angeordnet sind.

6. Streugutaustraganlage nach einem der Ansprüchen 1 bis 5, **dadurch gekennzeichnet, dass** das Förderelement (4) aus einem flexiblen Kunststoffschlauch besteht und die innen gelagerte flexible Förderwendel (4.1) aus Federstahl mit einem quadratischen Querschnitt ausgebildet ist.

7. Streugutaustraganlage nach einem der Ansprüchen 1 bis 6, **dadurch gekennzeichnet, dass** am Gehäuse (6) des Absperr- und Zuluftventils (7) eine Öffnung vorgesehen ist, die das Ansaugen von Luft durch das schnell fallende Streugut ermöglicht.

8. Verfahren zur Ausbringung von Streugut aus einer Streugutaustraganlage für Fahrzeuge, insbesondere Schienenfahrzeuge, **dadurch gekennzeichnet, dass** die Streugutaustraganlage gemäß den Ansprüchen 1 bis 7 ausgebildet ist,
- wobei das Streugut durch das Auflockerungselement (2) aufgelockert und vergleichmäßigt wird,
- in der Dosiereinheit (3) die zu fördernde Streugutmenge festgelegt wird, wobei
• die innerhalb der Dosiereinheit (3) angeordneten Prallbleche (3.5) zur Vermeidung einer Überschüttung der Dosiereinheit (3) eine Barriere bilden,
• das Streugut von der Dosiereinheit (3) aus in das Förderelement (4) übergeben wird und von dort aus rein mechanisch zur Austragsleitung (5) gefördert wird, welche das Streugut in unmittelbarer Nähe des Radreifen - Schiene - Spaltes ausbringt.

9. Verfahren nach Anspruch 8, **dadurch gekennzeichnet, dass** zeitgleich mit dem Abschalten des Fördervorganges, das Absperrventil (7) betätigt wird und somit das Nachrieseln von Streugut verhindert wird.

10. Verfahren nach den Ansprüchen 8 und 9, **dadurch gekennzeichnet, dass** am Gehäuse (6) des Absperr- und Zuluftventils (7) eine Öffnung nach außen angebracht ist, durch welche Luft durch das schnell fallende Streugut angesaugt wird.

## Claims

1. A scattering-material dispensing system for vehicles, in particular rail vehicles, comprising a reservoir (1) that can be filed with scattering material and a loosening element (2) associated with the dispensing opening of the reservoir (1), and at least one dispensing line (5) for the scattering material ending in the immediate vicinity of a gap between a wheel rim and a rail, wherein
the loosening element (2) is arranged upstream of a metering unit (3) and a conveying element (4) connected to the metering unit (3), wherein the conveying element (4) is connected to a shut-off and supply-air valve (7) and a dispensing line (5), wherein the metering unit (3) consists of a screw conveyor arranged in a tubular housing (3.1), **characterised in that** the tubular housing (3.1) has a cross-section that tapers conically towards the outlet (3.2), and **in that** baffle plates (3.5) for producing a labyrinth are arranged between the blades (3.3) of the screw thread (3.4).

2. The scattering-material dispensing system according to claim 1, **characterised in that** the loosening element (2), the metering unit (3), and the conveying element (4) are connected to one another via a common drive shaft (8).

3. The scattering-material dispensing system according to either one of claims 1 or 2, **characterised in that** the conveying element (4) consists of a flexible hose with an internally mounted flexible conveyor spiral (4.1) and is arranged between the conical outlet (3.2) of the metering unit (3) and the shut-off and supply-air valve (7).

4. The scattering-material dispensing system according to any one of claims 1 to 3, **characterised in that** the loosening element (2) has paddle-shaped plates (2.1) which engage in the dispensing opening (1.1) of the reservoir (1) so as to loosen the scattering material.

5. The scattering-material dispensing system according to any one of claims 1 to 4, **characterised in that** the loosening element (2) and the metering unit (3) are arranged in common housing horizontally to the vertical centre axis of the reservoir (1).

6. The scattering-material dispensing system according to any one of claims 1 to 5, **characterised in that** the conveying element (4) consists of a flexible plastics hose and the internally mounted flexible conveyor spiral (4.1) is formed of spring steel with a square cross section.

7. The scattering-material dispensing system according to any one of claims 1 to 6, **characterised in that** an opening is provided on the housing (6) of the shut-off and supply-air valve (7), which opening enables air to be sucked in by the rapidly falling scattering material.

8. A method for outputting scattering material from a scattering-material dispensing system for vehicles, in particular rail vehicles, **characterised in that** the scattering-material dispensing system is formed in accordance with claims 1 to 7,
- wherein the scattering material is loosened and homogenised by the loosening element (2),
- the amount of scattering material to be conveyed is defined in the metering unit (3), wherein
• the baffle plates (3.5) arranged within the metering unit (3) form a barrier so as to prevent material from piling up over the metering unit (3),
• the scattering material is transferred from the metering unit (3) into the conveying element (4) and is conveyed from there to the dispensing line (5) purely mechanically, said dispensing line then outputting the scattering material in the immediate vicinity of the gap between a wheel rim and a rail.

9. The method according to claim 8, **characterised in that** the shut-off valve (7) is actuated simultaneously with the deactivation of the conveying process, and any subsequent trickling of scattering material is thus prevented.

10. The method according to claims 8 and 9, **characterised in that** an opening is attached outwardly on the housing (6) of the shut-off and supply-air valve (7), through which opening air is sucked in by the rapidly falling scattering material.

## Revendications

1. Installation de déversement de matériau d'épandage pour véhicules, en particulier véhicules ferroviaires, avec un réservoir (1) pouvant être rempli de matériau d'épandage et un élément d'ameublissement (2) associé à l'ouverture de déversement du réservoir (1) ainsi qu'au moins une conduite de déversement (5) pour le matériau d'épandage se terminant à proximité immédiate d'une fente - bandage de roue - rail,
dans laquelle une unité de dosage (3) et un élément de transport (4) relié à l'unité de dosage (3) sont placés en aval de l'élément d'ameublissement (2), dans laquelle l'élément de transport (4) est relié à une soupape d'arrêt et d'amenée d'air (7) et à une conduite de déversement (5), dans laquelle l'unité de dosage (3) se compose d'un convoyeur à vis agencé dans un boîtier tubulaire (3.1), **caractérisée en ce que** le boîtier tubulaire (3.1) présente une coupe transversale se rétrécissant de manière conique vers le déversement (3.2) et que des déflecteurs (3.5) sont agencés entre les lames (3.3) du filetage de vis (3.4) pour la génération d'un labyrinthe.

2. Installation de déversement de matériau d'épandage selon la revendication 1, **caractérisée en ce que** l'élément d'ameublissement (2), l'unité de dosage (3) et l'élément de transport (4) sont reliés l'un à l'autre par le biais d'un arbre d'entraînement commun (8).

3. Installation de déversement de matériau d'épandage selon l'une quelconque des revendications 1 et 2, **caractérisée en ce que** l'élément de transport (4) se compose d'un tuyau flexible avec une hélice de transport (4.1) flexible logée à l'intérieur et est agencé entre le déversement conique (3.2) de l'unité de dosage (3) et la soupape d'arrêt et d'amenée d'air (7).

4. Installation de déversement de matériau d'épandage selon l'une quelconque des revendications 1 à 3, **caractérisée en ce que** l'élément d'ameublissement (2) présente des plaques en forme de rame (2.1), qui font entrer le matériau d'épandage par ameublissement dans l'ouverture de déversement (1.1) du réservoir (1).

5. Installation de déversement de matériau d'épandage selon l'une quelconque des revendications 1 à 4, **caractérisée en ce que** l'élément d'ameublissement (2) et l'unité de dosage (3) sont agencés dans un boîtier commun à l'horizontale par rapport à l'axe médian vertical du réservoir (1).

6. Installation de déversement de matériau d'épandage selon l'une quelconque des revendications 1 à 5, **caractérisée en ce que** l'élément de transport (4) se compose d'un tuyau en plastique flexible et l'hélice de transport (4.1) flexible logée à l'intérieur est réalisée en acier à ressort avec une coupe transversale carrée.

7. Installation de déversement de matériau d'épandage selon l'une quelconque des revendications 1 à 6, **caractérisée en ce qu'**une ouverture est prévue au niveau du boîtier (6) de la soupape d'arrêt et d'amenée d'air (7), qui permet l'aspiration d'air par le matériau d'épandage qui tombe rapidement.

8. Procédé de déversement de matériau d'épandage d'une installation de déversement de matériau d'épandage pour véhicules, en particulier véhicules ferroviaires, **caractérisé en ce que** l'installation de déversement de matériau d'épandage est réalisée selon les revendications 1 à 7,
- dans lequel le matériau d'épandage est ameubli et égalisé par l'élément d'ameublissement (2),
- la quantité de matériau d'épandage à transporter est fixée dans l'unité de dosage (3), dans lequel
- les déflecteurs (3.5) agencés à l'intérieur de l'unité de dosage (3) forment une barrière pour éviter un ensevelissement de l'unité de dosage (3),
- le matériau d'épandage est transmis de l'unité de dosage (3) à l'élément de transport (4) et est transporté de là à la conduite de déversement (5) de manière purement mécanique, laquelle déverse le matériau d'épandage à proximité immédiate de la fente - bandage de roue - rail.

9. Procédé selon la revendication 8, **caractérisé en ce que** la soupape d'arrêt (7) est actionnée en même temps que l'arrêt de l'opération de transport et ainsi la poursuite de l'écoulement de matériau d'épandage est empêchée.

10. Procédé selon les revendications 8 et 9, **caractérisé en ce qu'**une ouverture est montée vers l'extérieur au niveau du boîtier (6) de la soupape d'arrêt et d'amenée d'air (7), par laquelle l'air est aspiré par le matériau d'épandage qui tombe rapidement.
